# EUROPEAN PATENT APPLICATION

(11) **EP 3 428 139 A1**
(43) Date of publication of application: **16.01.2019**
(21) Application number: 17180726.6
(22) Date of filing: 11.07.2017
(51) Int. Cl.: C05D 1/00, C05D 1/02, C05D 9/00, C05C 11/00

(54) **FERTILIZER FOR FOLIAR USE OR FERTIGATION**

(71) Applicant: Tessenderlo Group NV/SA, 1050 Brussels (BE)
(72) Inventor: Claeys, Aurelien, 3090 Overijse (BE); Peys, Nick, 2491 Balen-Olmen (BE); White, Nicolas, 59990 Maresches (FR)
(74) Representative: Hoyng Rokh Monegier LLP

(57) **Abstract**

The invention relates to a soluble fertilizer composition for foliar application or fertigation containing (i) a potassium and sulfate containing powder and (ii) a boron powder compound, wherein the fertilizer is a NPK-SB of the type ≥0 - 0 - >15 - >42 - >0.1 for the potassium sulfate borate fertilizer, in which N is calculated as N, P as P₂O₅, K as K₂O, S as SO₄ and B as B. The fertilizer composition is applied as foliar spray or by fertigation.

## Description

### BACKGROUND OF THE INVENTION

### 1. Field of the Invention

The invention relates generally to fertilizers for foliar use or fertigation, and more particularly, to potassium and sulfate comprising fertilizers for these uses.

### 2. Description of the Related Art

Fertilizers have long been in use. Generally the soil is provided with necessary components like nitrogen (urea, nitrate), phosphorous (phosphate), potassium (as a salt), sulphur (sulfate or sulfite), or by providing organic fertilizers. It has become clear that applying fertilizers on the leafs of plants may be advantageous, because components can be directly taken up by the plant. Fertilizers can also be applied with fertigation techniques which is advantageous because the required amount of fertilizer is locally applied in solution, preventing waste and leaching of fertilizers.

Such fertilizers are dissolved in water and applied by spraying for foliar application or locally applied via a nozzle in a fertigation technique.

Fertilizers for foliar spray or fertigation need to dissolve fast and complete, and generally are dissolved at relatively high concentration, in order to keep the amount of water that needs to be transported or sprayed as low as possible.

It is furthermore desirable, to have certain other elements applied to crop like for example nutritional or microelements.

It is therefore an object of the invention to provide a potassium and sulfate comprising fertilizer, having an improved maximum solubility and/or improved dissolution speed and comprising at least one further useful element for crops.

It is a further object of the invention to provide an improved fertilizer for foliar application or fertigation.

It is a further object of the invention to provide an improved use of fertilizer.

### BRIEF SUMMARY OF THE INVENTION

One or more of these objects is achieved by providing a fertilizer containing (i) potassium and sulfate containing powder and (ii) a boron powder compound, wherein the fertilizer is a NPK-SB fertilizer of the type ≥0 - 0 - >15 - >42 - >0.1, in which N is calculated as N, P as P2O5, K as K2O, S as SO4 and B as B.

In one embodiment of the invention, the potassium and sulfate containing powder is a powder with the following characteristics: about 80 wt% or more of the powder has a particle size of about 0.2 mm or lower, preferably about 0.13 mm or less. The particle size preferably is such, that about 80 wt% or more is about 0.02 mm or higher, more preferably about 0.04 mm or higher.

In another embodiment of the invention, the potassium and sulfate containing powder is a powder with the following characteristics: about 5% or less has a particle size larger than 1 mm, at least 40% has a particle size of 0.15 mm or lower and at least 5% has a particle size of 0.3 or higher. The particle size preferably is such that about 90% or more is smaller than 0.3 mm, and about 60% or more is larger than 0.1 mm.

Preferably, the boron compound is boric acid or a borate salt such as an octaborate salt. Suitable counter ions are ammonia, sodium, potassium, zinc, manganese, or the like. Preferred boron compounds include boric acid or a sodium or potassium salt of octaborate, and most preferred is potassium octaborate.

Preferably, the boron compound is a powder having largely the same, or smaller particle sizes than the potassium sulfate powder.

The object of the invention is furthermore achieved by a method of improving the yield of a crop, comprising the application of a potassium sulfate borate fertilizer wherein said fertilizer is dissolved in water, after which the solution is applied to said crop by fertigation or as foliar spray.

The preferred potassium, sulfate and borate fertilizer shows a very high dissolution speed and maximum solubility in water, and is well wettable, and thereby can be fully soluble without mechanical stirring.

The invention furthermore relates to the use of a boron compound in a fertilizer composition containing a soluble potassium and sulfate containing composition, wherein the fertilizer is a NPK-SB of the type ≥0 - 0 - >15 - >42 - >0.1 for the potassium sulfate borate fertilizer, in which N is calculated as N, P as P₂O₅, K as K₂O, S as SO₄ and B as B

Furthermore, the potassium, sulfate and borate fertilizer shows an increased uptake of potassium and/or sulfur by the plant/crop, relative to a potassium and sulfate fertilizer without a boron compound. Also, the boron compound shows increased uptake due to the presence of potassium and sulfur.

### DESCRIPTION OF ILLUSTRATIVE EMBODIMENTS

The following is a description of certain embodiments of the invention, given by way of example only and with reference to the examples.

Potassium and sulfate containing fertilizer is next to potassium nitrate viewed as fast soluble type of potassium containing fertilizer available for foliar application or fertigation with a relatively high content of potassium.

The fertilizer composition contains (i) soluble potassium and sulfate containing powder and (ii) a boron compound, wherein the fertilizer is a NPK-SB of the type ≥0 - 0 - >15 - >42 - >0.1, in which N is calculated as N, P as P2O5, K as K2O, S as SO4 and B as B.

Examples of the potassium and sulfate containing powder that are soluble in water include K₂SO₄ (potassium sulfate), KHSO₄ (potassium bisulphate), KNH₄SO₄ (potassium ammonium sulphate), K₂Mg(SO₄)₂ (potassium magnesium sulphate), Schoenite, polyhalite and mixtures thereof.

Preferably, the amount of S as SO4 is about 45% or higher, even more preferably about 48% or higher.

Generally, the amount of K as K2O is about 15% or higher, preferably about 20% or higher, and even more preferably about 30% or higher.

In a preferred embodiment, the potassium and sulfate containing powder is potassium sulfate.

If the potassium and sulfate containing powder is potassium sulfate, the amount of K as K2O is about 45% or higher, preferably, the amount of K is about 47% or higher, even more preferable about 48% or higher.

The amount of boron is about 0.1% (1000 ppm) or higher, preferably 0.3% or higher, preferably 0.5% or higher, and even more preferably 0.6% (6000 ppm) or higher, which means generally an amount of boron compound of about 1.5 wt% or more in the fertilizer composition. Boron is generally present in the boron compound in about 16-22 wt%. Preferably, the amount of boron may be about 1 wt% or up to about 2 wt%. Generally, the amount is 3 wt% or lower, and preferably, the amount is about 2 wt% or lower.

A preferred composition is an NPK-SB of 0 - 0 - 47 or higher - 45 or higher - 0.5 or higher.

In one embodiment of the invention, the potassium and sulfate containing powder also comprises nitrogen, like for example in potassium ammonium sulphate. The amount of nitrogen preferably is about 3% or higher, like for example about 8-9%.

Generally, the amount of nitrogen will be about 15% or lower, preferably 10% or lower.

In one embodiment of the invention, which can be combined with other embodiments, a nitrogen compound may be added, which would lead to a N value of about 5 or lower. For example, urea powder can be added in amounts up to 10 wt%, such as for example 7 wt% or 5 wt%.

The potassium and sulfate comprising powder is a powder with preferably the following characteristics: about 80 wt% or more of the powder has a particle size of about 0.2 mm or lower, preferably about 0.13 mm or less. The particle size preferably is such, that about 80 wt% or more is about 0.02 mm or higher, more preferably about 0.04 mm or higher. The powder preferably has a bulk density (loose) of about 1.10, and struck (or tapped) of about 1.44.

In another embodiment, the potassium and sulfate containing powder preferably is a powder with the following characteristics: about 5% or less has a particle size larger than 1 mm and at least 40% has a particle size of 0.15 mm or lower while at least 5% has a size of 0.3 mm or higher. The particle size preferably is such that about 90% or more is smaller than 0.3 mm, and about 60% or more is larger than 0.1 mm.

Preferably, the boron compound is boric acid or a borate salt powder.

More preferably, the boron compound is an octaborate salt having as counter ion ammonia, sodium, potassium, zinc, or manganese.

More preferably the boron compound is boric acid or an sodium or potassium salt of octaborate, and most preferably, the boron compound is potassium octaborate.

Preferably, the boron compound is a powder having largely the same or smaller particle sizes than the potassium sulfate powder. In a preferred embodiment, the d10 and the d90 of the boron compound are lower than three times the value of the potassium and sulphate containing compound, more preferably less than two times said value, and even more preferably, lower than said value. For example if the d10 and d90 of the potassium and sulfate containing powder are 40 and 130 µm, than the d10 and d90 of the boron compound are preferably less than 120 and 390 µm, more preferably less than 80 and 260 µm respectively, and even more preferably lower than 40 and 130 µm.

In a particularly preferred embodiment of the invention, the fertilizer composition is a powder having a particle size of about 0.2 mm or lower, and wherein about 95 wt% or more of the fertilizer composition powder has a particle size of about 0.02 mm or higher, as such particle size is correlated with a high dissolution speed.

The fertilizer composition according the present invention is a powder, which is distinguished from e.g. granular fertilizers because granules have generally particle sizes of about 2 mm or larger.

Preferably, the fertilizer composition according to the invention, as a 1 wt% solution of the fertilizer composition has a pH of about 4 or lower.

A preferred fertilizer composition of the invention dissolves easily in water, such that 50 gram of said potassium sulfate powder dissolves in 1 litre of water without stirring within about 3 minutes or less, preferably 1 min or less.

The amount of chloride in the fertilizer composition of the present invention generally may be about 3 wt% or less, preferably about 1 wt% or less, and more preferably about 0.5 wt% or less. Higher amounts of chloride can cause leaf-burn, which is to be precluded.

The preferred fertilizer composition of the invention is a powder wherein about 80 wt% or more of the powder has a particle size of about 0.2 mm or less, preferably 0.13 mm or less. The fertilizer composition according to the invention is preferably a powder wherein about 90 wt% or more of the powder has a particle size of about 0.2 mm or less, preferably 0.13 mm or less. The fertilizer composition according to the invention is more preferred, a powder wherein about 95 wt% or more, even more preferred about 98% or more of the powder has a particle size of about 0.2 mm or less, preferably 0.13 mm or less.

The fertilizer composition according to the invention is preferably a powder wherein about 80 wt% or more of the powder has a particle size of about 0.02 mm or more, preferably about 0.04 mm or more. More preferably, the amount is about 90% or more, of a particle size of 0.02 mm or larger, preferably 0.04 mm or larger.

Preferably, about 10 wt% or less, more preferable about 5 wt% or less of the fertilizer composition is less than 0.045 mm,.

Preferably, about 15 wt% or less, and more preferably about 10 wt% or less, and even more preferable about 5 wt% or less of the powder is large than 0.125 mm.

Preferably, about 0.5 wt% or less is about 0.3 mm or lower.

Preferably the fertilizer composition of the invention has a bulk density (loose) of between 0.8 - 1.3, preferably between 0.9 and 1.1, and struck (or tapped) of about 1.3 - 1.5, preferably 1.4-1.5.

Preferably, the angle of repose is about 34-41 degrees.

The fertilizer composition according to the present invention preferably conforms with the above characteristics in combination, and a man skilled in the art will realise that selections from the higher and lower sizes can be combined, and that these can be combined with other characteristic as described in this patent application.

For example, potassium sulfate powder is commercially available, for example as SoluPotasse, polyhalite or K-Leaf, or potassium sulfate powder can be prepared by milling and sieving potassium sulfate if the particle size distribution is not as required. As raw material, for example, course potassium sulfate as known in the art for fertilizers can be used.

Other potassium and sulfate containing powders like schoenite, polyhalite, potassium bisulfate and potassium ammoniumsulfate and the like, are commercially available, and may be treated to obtain the desired particle size if needed.

Boric acid or octoborate salts in powder form are commercially available, and/or can be milled to the required particle size distribution.

Use of such a boron compound in a fertilizer composition as described is also part of the invention.

Preferably, the pH of the fertilizer composition solution of a 1 wt% solution is about 5 or less, preferably about 4 or less, and most preferably about 3.5 or less. Generally, the pH will be about 2 or higher, preferably about 2.5 or higher. A slightly acidic solution is an advantage, because the dissolution speed is increased in comparison to a potassium sulfate that dissolves with a pH of about 5 or higher. Also, the slightly acidic solution precludes blocking in the equipment, and even has a cleaning effect in the equipment. The acidity can be achieved by having some acid component in the powder like potassium hydrogensulfate, citric acid, potassium dihydrogenphosphate and the like.

In a preferred embodiment of the invention, a solution is prepared by filling the main tanks of a spray apparatus or fertigation vessel for 40-80 % with water, adding the fertilizer composition according to the invention, and further adding water to fill the tank to about 100% of the required amount.

In a preferred embodiment, the fertilizer composition further may comprise surfactants, wetters, adjuvants, emulsifying agents and the like, which improve the formulation from a physico-chemical perspective.

In a further preferred embodiment, the fertilizer composition according the present invention may comprise micronutrients such as Zn, Fe, Mn, Co and/or Cu salts, for example as EDTA chelates.

In a further preferred embodiment, magnesium is provided by using a potassium magnesium sulfate salt alone (for example as Schoenite), or in admixture with potassium sulfate or another potassium and sulfate containing salt like for example potassium ammonium sulfate. A 50/50 mixture of Schoenite and potassium ammonium sulfate would allow a fertilizer of the type NPK-S-B-Mg of >3 - 0 - >20 - >48 - >0.1 - > 1.

The potassium and sulfate containing fertilizer may comprise some phosphorous, and the zero in the NPK notation only means that phosphorous would be a minor component.

The present invention also relates to a method of improving the yield of a crop, wherein a fertilizer composition according to the invention as described above is dissolved in water and is applied to said crop as a foliar application or by fertigation.

In a further embodiment, the fertilizer according to the present invention may be combined with other soluble fertilizers such as magnesium nitrate, urea, ammonium phosphate and the like.

The method is preferably applied on a crop, which is well responsive to boron, which in particular includes celery, alfalfa, cotton, garlic, peanut, small potatoes, beet, coffee, cabbage, eucalyptus, sunflower, apple tree and turnip or medium responsive for boron which includes lettuce, broccoli, cacao, carrots, rapeseed, spinach, papaya, corn, radish, cabbage, tomato, wheat and grape.

Crop suitable for foliar spray or fertigation thus includes celery, alfalfa, cotton, garlic, peanut, potatoes, sugar beet, olives, coffee, cabbage, eucalyptus, sunflower, apple tree, turnip, lettuce, broccoli, cacao, carrots, rapeseed, spinach, papaya, corn, radish, cabbage, tomato, wheat, citrus, tea, tobacco and grape.

Preferred crops includes sugar beets, corn, tomato, apples & citrus.

The fertilizer composition is preferably applied for foliar application in an amount that the crop receives about 30 g/ha or more of boron, and about 700 g/ha or less per application. At for example 1% boron (10 g/kg) of the fertiliser composition of the invention, about 3 kg or more per hectare per application (about 1.2 kg or more per acre per application) can be suitable, and in an amount of about 30 kg or less per hectare per application (about 12 kg or less per acre per application).

If used as foliar application, generally one or more applications are suitable. If used in fertigation, the fertilizer composition of the invention is used one or more times per year, at higher concentrations, or continuously at low concentration.

For foliar spray, preferred amounts include about 2% to 5% by weight, assuming an amount of water per hectare is 300L/ha (i.e. about 32 gal/acre). In case lower amounts of water are to be applied, like for example 100 L/ha, or 200 L/ha, the concentrations may be higher, like for example up to 5%,to 8% while amounts lower than 10% are preferred.

For fertigation, the total amount of boron applied to the crop can be up to a factor of 10 higher compared to foliar spray. The fertilizer composition of the present invention generally will be applied at a concentration of about 20-400 ppm of K, made from stock solution. The stock solution can be between about 0.4-12 wt% solution of fertilizer composition (which is about 4 to about 120 g/L), although other amounts are feasible. Preferred amounts for a stock solution include about 4%, 5% or 7%, 8% or 10%, or even 12%. The high solubility of the fertilizer composition of the invention allows to use a more concentrated stock solution.

For fertigation, the amount of fertilizer composition applied per day may be between 0.5 and 15 kg/ha, preferably 1-10 kg/ha/day for one or more days, preferably at least 10 days, more preferably at least 30 days. If suitable, the amount of fertilizer according to the invention may be balanced with for example potassium sulfate for fertigation, to adjust the total amounts of the different components.

It appears that the potassium and sulfate containing powdery fertilizer according the invention dissolves quickly, even if concentrations are used close to the maximum solubility.

For foliar application, the fertilizer composition according the invention may be applied in an amount of about 2 kg or more per hectare per application (i.e. about 0.8 kg or more per acre per application). In a preferred embodiment, the amount applied per hectare per application is about 3 resp. 5 kg or more (i.e. per acre about 1.2 kg, preferably 2 kg/acre, or more per application).

The fertilizer composition according the invention may be applied in an amount of about 25 kg or less per hectare per application (i.e. about 10 kg or less per acre per application). In a preferred embodiment, the amount applied is about 20 kg or less per hectare per application (i.e. about 8 kg per acre or less per application).

Optimal amounts of the fertilizer composition according to the invention will depend on the specific crop, and include foliar application of about 4, about 6, about 8, about 10, about 12, about 14 or about 15 kg/ha/application.

The fertilizer composition will be dissolved in water in amounts suitable to achieve the amounts per hectare described hereinbefore. The actual concentration will depend on the amount of liquid that will be applied by the farmer on its crops. Suitable amounts of water per acre on crops include between about 10 and about 40 gal/acre (about 40 - 160 L/acre, which is about 100 to 400 L/ha). To apply suitable amounts of fertilizer composition according the present invention, the concentration preferably is between about 1% by weight and about 10% by weight.

The source of water is not limited, and can be well-water, river water, rainwater, tap water or the like. The water to be used should preferably not have high calcium concentration, because calcium sulfate (gypsum) may precipitate. The allowable amount of calcium will depend on the concentration of fertilizer composition aimed for in the foliar spray or fertigation.

The fertilizer composition according to the present invention may be applied once, twice, three times, four times or more often during the growth of the crop as foliar application or in the fertigation system. Generally, one, two or three applications will be adequate to clearly improve the yield per acre.

In a preferred embodiment, the fertilizer composition is applied according to the above described preferences, in combination with soil fertilization, wherein the soil is fertilized with at least 40 kg/ha potassium (as K₂O), preferably at least 100 kg/ha potassium (as K₂O).

The soil fertilizer may be powder, granular, water soluble or liquid fertilizer.

Preferably, the amount of potassium in the soil for a particular crop is close to the maximum desirable amount.

In a preferred embodiment, the application of the fertilizer composition according the present invention is combined with the application of a growth regulator or pesticide such as an insecticide or fungicide. The growth regulator or pesticide can be tested beforehand, to check compatibility with the fertilizer composition solution. In particular, such further compound should not comprise calcium.

In a preferred embodiment, the fertilizer composition is applied as foliar application at suitable periods during growth of the crop.

In case the fertilizer composition is applied more than once, a further application is preferably between about 7 days up to about 20 days from the earlier application, but may also be up to about 30 days after application of the earlier application or even longer.

Further modifications in addition to those described above may be made to the structures and techniques described herein without departing from the spirit and scope of the invention. Accordingly, although specific embodiments have been described, these are examples only and are not limiting upon the scope of the invention.

### EXAMPLES

### Measurement methods

Dissolution speed: 100 g fertilizer composition is dissolved in 1000 ml water in a beaker (height 18 cm, diameter 9 cm) while stirring at 250 rpm with a mechanical stirrer (diameter 5 cm) at 2 cm from the bottom. The dissolution is registered based on conductivity measurement every 30 seconds till a plateau is reached. The conductivity can be measured with a Cond 340i of WTW with a Tetracon 325 electrode (1 cm² electrodes at 1 cm distance), positioned at about 600 ml height of the 1L content; the electrode should be calibrated. 100 g ultrapure potassium sulfate fully dissolved has a conductivity of 81 S/cm (Ω⁻¹cm⁻¹). In the calculation, furthermore corrections should take into account for a decrease in temperature of a few degrees Celsius, and of the non-linear ionization. These standard correction factors provided in the software belonging to for example the Cond 340i.

The pH is measured with a standard pH electrode.

Particle size distribution is measured with a sieve analysis, and the values are the weight amounts, meaning that for example for the d10, that 10 wt% of the product has a smaller size than the measured d10, and 90 wt% has a size larger than that d10. The values are given in mm.

Segregation was measured by using a well homogenized fertilizer composition of 400 ml in a container 500 ml, and shaking the container for 20 min on a retch vibration plate resp. a VWR standard analog shaker, and measuring a sample from the top, middle and bottom to check homogeneity of the granulometry in comparison to the non-vibrated/shaken mixture.

### Example 1

A spray unit for a tractor of about 1 metric ton volume was filled with about 600 L water from a rain water tank. A fungicide was added, and 40 kg fertilizer powder with the characteristic given in Table 1. After 1 min, virtually all of the fertilizer had dissolved. Over a further 3 min, another 300 L water was added, causing some turbulence in the spray unit tank. All fertilizer was dissolved by the time the tank was filled. Spraying of the solution was smooth through the nozzles; no blocking was observed. After finishing the application, the nozzles were checked, and appeared to be clean.

**Table 1: characteristics of potassium sulfate and potassium or sodium octaborate powder**

| Characteristic | Comparative example A | Example 1 | Example 2 | Example 3 |
|---|---|---|---|---|
| Boron compound | - | K₂B₈O₁₃ | K₂B₈O₁₃ | Na₂B₈O₁₃ |
| Amount of boron compound (appr) | - | 5 wt% | 10 wt% | 10 wt% |
| K₂O (%) | 51.7 | 50.1 | 48.5 | 46.7 |
| SO₄ (%) | 53 | 50 | 48 | 48 |
| B (%) | 0.0 | 1.0 | 1.9 | 2.1 |
| Na₂O (%) | 0.4 | 0.4 | 0.4 | 1.6 |
| Cl (%) | 0.4 | 0.4 | 0.4 | 0.4 |
| Max solubility | 11.88 | 12.55 | 12.85 | 14.22 |
| D10 (µm) | 41 | 26 | 15 | 20 |
| D25 (µm) | 58 | 50 | 43 | 42 |
| D75 (µm) | 106 | 100 | 98 | 97 |
| D90 (µm) | 133 | 126 | 126 | 125 |
| Bulk density loose (g/cm³) | 1.12 | 1.04 | 0.94 | 0.87 |
| Bulk density tapped (g/cm³) | 1.49 | 1.46 | 1.38 | 1.24 |
| pH of a 1 wt% solution | 2.8 | 2.8 | 3.0 | 3.3 |
| Dissolution speed | | | | |
| % dissolved after 30 s | 34 | 68 | 87 | 58 |
| % dissolved after 1 min | 90 | 91 | 95 | 91 |
| % dissolved after 2 min | 96 | 96 | 97 | 97 |

### Example 2

A spray unit for fertigation of about 1 metric ton volume was filled with about 600 L water from a rain water tank. 50 kg fertilizer powder with the characteristic given in Table 2 was added, and after 3 min, virtually all of the fertilizer had dissolved. Over a further 3 min, another 300 L water was added, causing some turbulence in the tank. All fertilizer was dissolved by the time the tank was filled. Slowly dripping the solution on the field through fertigation lines was smooth through the nozzles; no blocking was observed. After finishing the application, the nozzles were checked and appeared to be clean. For examples 4 and 5, the same potassium sulfate was used as described for comparative example A. For examples 6 and 7, a standard grade soluble potassium sulfate was used.

**Table 2: characteristics of potassium sulfate and boric acid or potassium octaborate powder**

| Characteristic | Example 4 | Example 5 | Example 6* | Example 7* |
|---|---|---|---|---|
| Boron compound | H₃BO₃ | H₃BO₃ | K₂B₈O₁₃ | K₂B₈O₁₃ |
| Amount of boron compound | 6 wt% | 8.5 wt% | 5 wt% | 10 wt% |
| K₂O (%) | 48.6 | 47.3 | 49.9 | 48.3 |
| SO₄ (%) | 50 | 49 | 50 | 48 |
| B (%) | 1.0 | 1.5 | 1.0 | 1.9 |
| Max solubility | 12.9 | 13.0 | 12.81 | 12.90 |
| D10 (µm) | 36 | 33 | 40 | 22 |
| D25 (µm) | 56 | 54 | 84 | 72 |
| D75 (µm) | 108 | 106 | 193 | 198 |
| D90 (µm) | 138 | 136 | 369 | 440 |
| Bulk density loose (g/cm³) | 1.02 | 1.03 | 1.07 | 1.00 |
| Bulk density tapped (g/cm³) | 1.38 | 1.37 | 1.47 | 1.39 |
| pH of a 1 wt% solution | 2.6 | 2.6 | 2.7 | 3.0 |
| Dissolution speed | | | | |
| % dissolved after 30 s | 63 | 59 | 38 | 30 |
| % dissolved after 1 min | 96 | 95 | 79 | 79 |
| % dissolved after 2 min | 98 | 98 | 89 | 90 |

| | | | | |
|---|---|---|---|---|
| * The potassium sulfate was a standard grade soluble potassium sulfate | | | | |

In all cases, no phase segregation was observed, and the particle sizes of the boron compound was the same or smaller than the potassium sulfate powder. One sample of boric acid was tested with a particle size d90 > 0.9 mm, which was mixed with the potassium sulfate of comparative experiment A. This mixture showed substantial phase separation.

### Example 3

Pot tests were performed on potatoes and maize with the formulation as described in Example 1, with foliar spray after 4, 6 and 8 weeks. The amounts of K, S and B in the plants have been analysed, and the results have demonstrated that the combined application of K, S and B on potatoes and maize result in higher amounts of K, S and B intakes by plants, in comparison with the applications of solely a potassium and sulfate containing powder and a boron powder compound

### CONCLUSION

The examples are illustrative only, but the tests show that the dissolution speed and maximum solubility increases in the powder blend of potassium sulfate and several different boron compounds. Both foliar application and fertigation can be effective, while the nozzles of the spray or dripping equipment stay clean.

## Claims

1. Fertilizer composition containing (i) a soluble potassium and sulfate containing composition and (ii) a boron compound, wherein the fertilizer is a NPK-SB of the type ≥0 - 0 - >15 - >42 - >0.1 for the potassium sulfate borate fertilizer, in which N is calculated as N, P as P₂O₅, K as K₂O, S as SO₄ and B as B.

2. Fertilizer composition according to claim 1, wherein the potassium sulfate powder is a powder with the following characteristics: about 80 wt% or more of the powder has a particle size of about 0.2 mm or lower, preferably about 0.13 mm or less, and the particle size preferably is such, that about 80 wt% or more is about 0.02 mm or higher, more preferably about 0.04 mm or higher.

3. Fertilizer composition according to claim 1, wherein the potassium sulfate powder is a powder with the following characteristics: about 5% or less has a particle size larger than 1 mm and at least 40% has a particle size of 0.15 mm or lower and 5% has a particle size of 0.3 and higher, preferably the particle size preferably is such that about 90% or more is smaller than 0.3 mm, and about 60% or more is larger than 0.1 mm.

4. Fertilizer composition according to any one of the preceding claims, wherein the boron compound is boric acid or a borate salt used in an amount such that the amount of boron is between 0.6 and 2%.

5. Fertilizer composition according to claim 4, wherein the boron compound is an octaborate salt having as counter ion ammonia, sodium, potassium, zinc, or manganese.

6. Fertilizer composition according to claim 4, wherein the boron compound is boric acid or a sodium or potassium salt of octaborate.

7. Fertilizer composition according to claim 4, wherein the boron compound is potassium octaborate.

8. Fertilizer composition according to any one of the preceding claims, wherein the boron compound is a powder having largely the same, or smaller particle sizes than the potassium sulfate powder.

9. Fertilizer composition according to any one of the preceding claims, wherein about 95 wt% or more of the fertilizer composition has a particle size of about 0.2 mm or lower, and wherein about 95 wt% or more of the fertilizer composition has a particle size of about 0.02 mm or higher.

10. Fertilizer composition according to any one of the preceding claims, wherein a 1 wt% solution of the fertilizer composition has a pH of about 4 or lower.

11. Fertilizer composition according to any one of the preceding claims, wherein the fertilizer composition dissolves easily in water, such that 50 gram of said fertilizer composition dissolves in 1 litre of water without stirring within about 3 minutes or less.

12. A method of improving the yield of a crop, wherein a fertilizer composition according to any one of the preceding claims is dissolved in water and is applied to said crop as a foliar application or by fertigation.

13. The method according to claim 12, wherein said crop is celery, alfalfa, cotton, garlic, peanut, potatoes, sugar beet, olives, coffee, cabbage, eucalyptus, sunflower, apple tree, turnip, lettuce, broccoli, cacao, carrots, rapeseed, spinach, papaya, corn, radish, cabbage, tomato, wheat, citrus, tea, tobacco and grape.

14. The method according to any one of claims 12-13, wherein the fertilizer composition is applied as foliar application in an amount of about 1.2 kg or more per acre per application (about 3 kg or more per hectare per application), and in an amount of about 10 kg or less per acre per application (about 25 kg or less per hectare per application) once, twice, or three times or more often during the growth of the crop

15. The method according to any one of claims 12-13, wherein the fertilizer composition is applied by fertigation in an amount of 1-10 kg/ha/day for one or more days, preferably at least 10 days, more preferably at least 30 days.

16. Use of a boron compound in a fertilizer composition containing a soluble potassium and sulfate containing composition, wherein the fertilizer is a NPK-SB of the type ≥0 - 0 - >15 - >42 - >0.1 for the potassium sulfate borate fertilizer, in which N is calculated as N, P as P₂O₅, K as K₂O, S as SO₄ and B as B.
